# EUROPEAN PATENT APPLICATION

(11) **EP 4 782 737 A1**
(43) Date of publication of application: **29.07.2026**
(21) Application number: 24867873.2
(22) Date of filing: 04.07.2024
(51) Int. Cl.: F16L 15/04

(54) **THREADED JOINT FOR PIPE**

(30) Priority: 21.09.2023 JP 2023156458
(71) Applicant: Nippon Steel Corporation, Tokyo 100-8071 (JP); Vallourec Oil and Gas France, 59620 Aulnoye-Aymeries (FR)
(72) Inventor: KURIO, Satoshi, Tokyo 100-8071 (JP); MARUTA, Satoshi, Tokyo 100-8071 (JP); INOSE, Keita, Tokyo 100-8071 (JP); OGAWA, Masahiro, Tokyo 100-8071 (JP); MORISHIGE, Yuya, Tokyo 100-8071 (JP); UGAI, Shin, Tokyo 100-8071 (JP)
(74) Representative: J A Kemp LLP
(86) International application number: PCT/JP2024/024264
(87) International publication number: WO 2025/062790

(57) **Abstract**

A threaded connection (100) includes a pin (10) and a box (20). The pin (10) includes a pin sealing surface (12) and a tapered male thread part (13). The tapered male thread part (13) includes male thread parts (131, 132). The first male thread part (131) is disposed at a position closer to a pipe body (31) than the pin sealing surface (12). The second male thread part (132) is disposed at a position closer to the pipe body (31) than the first male thread part (131). The box (20) includes a box sealing surface (22) and a tapered female thread part (23). The tapered female thread part (23) includes female thread parts (231, 232). The first male thread part (131) and the first female thread part (231) have a first taper ratio (T1). The second male thread part (132) and the second female thread part (232) have a second taper ratio (T2), which is smaller than the first taper ratio (T1).

## Description

### TECHNICAL FIELD

The present disclosure relates to a threaded connection for pipe.

### BACKGROUND ART

In oil wells, natural gas wells, and the like, a large number of steel pipes referred to as oil country tubular goods are used to mine underground resources. Steel pipes are connected with each other with a threaded connection.

The types of threaded connections are roughly classified into an integral type and a coupling type. In the case of the integral type, each steel pipe includes a male thread part at one end part thereof, and includes a female thread part at the other end part thereof. By screwing and fastening the male thread part of the one steel pipe into and to the female thread part of the other steel pipe, the steel pipes are connected with each other. In the case of the coupling type, steel pipes each including male thread parts at both end portions thereof are connected with each other by a coupling. The coupling is a part having a tubular shape separately from steel pipes to be connected, and includes female thread parts at both end portions. The male thread part of the steel pipe is screwed into and fastened to each female thread part of the coupling. In general, the end portion of a steel pipe including a male thread part is referred to as "pin", and the end portion of a steel pipe or a coupling including a female thread part is referred to as "box".

A threaded connection is required to have sealing performance with respect to pressure fluid as one of the basic performances. Conventionally, there is a known threaded connection including a sealing portion serving as means for ensuring sealing performance. For example, Patent Literature 1 discloses a threaded connection in which a sealing surface is provided to the front end portion of a pin. A sealing surface is also provided to a box corresponding to the sealing surface of the pin. In a made-up state of the pin and the box, the sealing surface of the pin and the sealing surface of the box come into contact with each other, thus forming a sealing portion.

### CITATION LIST

### PATENT LITERATURE

Patent Literature 1: WO 2019/111803

### SUMMARY OF INVENTION

### TECHNICAL PROBLEM

In recent years, with an increase in depth of wells in the oil well drilling environment or the like, the number of layers is further increased in multi-layer string design, in which pipes are buried in multiple layers, so that a slim-type threaded connection has been widely used that has a small difference between the outer diameter of a box and the outer diameter of a pipe body. In a deep well, a formation pressure is applied to a multi-layer string and hence, a threaded connection that connects pipes with each other is required to have high external pressure resistance performance.

The box has a critical cross section (transverse cross section perpendicular to the pipe axis) at a position of the end of engagement between thread parts on the inner depth side of the box. In a normal threaded connection, the outer diameter of a box is significantly greater than the outer diameter of a pipe body, and the critical cross section area of the box is greater than the transverse cross-sectional area of the pipe body. In contrast, in a slim-type threaded connection, the outer diameter of a box is required to be nearly equal to the outer diameter of a pipe body. In the case in which the outer diameter of the box is simply reduced in a normal threaded connection with the radial position and the shape of the thread parts maintained, the critical cross section area of the box becomes smaller than the transverse cross-sectional area of the pipe body, so that tensile strength of the threaded connection is lowered. To ensure the tensile strength of the threaded connection, it can be considered to maintain the ratio of the critical cross section area of the box to the transverse cross-sectional area of the pipe body by moving the radial position of the thread parts toward the pipe axis while reducing the outer diameter of the box (that is, by reducing the diameter of the thread parts). However, restrictions are imposed on not only the outer diameter but also the inner diameter of a slim-type threaded connection used for a multi-layer string and hence, in this case, the wall thickness of the pin is reduced, thus reducing rigidity of the pin. This may impair external pressure resistance performance of the threaded connection.

Specifically, in the case in which a sealing surface is provided to the front end portion of the pin, pressure fluid (external pressure) from the outside of the threaded connection reaches the vicinity of the sealing surface through a gap formed between the male thread part and the female thread part, or through a fluid lubricant applied by coating to the surfaces of these thread parts. In the case in which rigidity of the pin is insufficient, there is a possibility that, due to an external pressure being applied to a wide range of the thread parts, the pin has diameter reducing deformation as a whole, so that it becomes impossible to ensure a sufficient contact between the sealing surface of the pin and the sealing surface of the box, leading to lowering of sealing performance with respect to the external pressure.

In the case in which rigidity of the pin is insufficient, the diameter of the box is reduced due to a load of the external pressure, so that plastic deformation may occur such that the front end portion of the pin is bent toward the pipe axis (is locally shrinked). In this case, there is also a possibility that it becomes impossible to ensure a sufficient contact between the sealing surface of the pin and the sealing surface of the box, so that leakage of an internal pressure occurs thereafter due to a load of pressure fluid (internal pressure) from the inside of the threaded connection.

Accordingly, it is an object of the present disclosure to provide a threaded connection for pipe that can achieve preferable external pressure resistance performance while ensuring tensile strength.

### SOLUTION TO PROBLEM

A threaded connection for pipe according to the present disclosure includes a pin having a tubular shape and a box having a tubular shape. The pin is provided continuously with a pipe body. The pin is inserted into the box. The box is made-up with the pin. The pin includes a pin sealing surface and a tapered male thread part. The pin sealing surface is provided to an outer peripheral surface of the pin at a front end portion of the pin. The tapered male thread part is provided to the outer peripheral surface of the pin. The tapered male thread part includes a first male thread part and a second male thread part. The first male thread part is disposed at a position closer to the pipe body than the pin sealing surface. The second male thread part is disposed at a position closer to the pipe body than the first male thread part, and is continuously formed with the first male thread part. The box includes a box sealing surface and a tapered female thread part. The box sealing surface is provided to an inner peripheral surface of the box corresponding to the pin sealing surface. The tapered female thread part is provided to the inner peripheral surface of the box. The tapered female thread part includes a first female thread part and a second female thread part. The first female thread part corresponds to the first male thread part. The second female thread part corresponds to the second male thread part. The first male thread part and the first female thread part have a first taper ratio. The second male thread part and the second female thread part have a second taper ratio. The second taper ratio is smaller than the first taper ratio.

### ADVANTAGEOUS EFFECT OF INVENTION

According to the threaded connection for pipe according to the present disclosure, it is possible to achieve preferable external pressure resistance performance while tensile strength of the threaded connection is ensured.

### BRIEF DESCRIPTION OF DRAWINGS

[FIG. 1] FIG. 1 is a longitudinal cross-sectional view of a threaded connection for pipe according to an embodiment.
[FIG. 2] FIG. 2 is an enlarged view of a first male thread part and a first female thread part included in the threaded connection shown in FIG. 1.
[FIG. 3] FIG. 3 is an enlarged view of a second male thread part and a second female thread part included in the threaded connection shown in FIG. 1.
[FIG. 4] FIG. 4 is a schematic view for describing advantageous effects of the embodiment.
[FIG. 5] FIG. 5 is a schematic view for describing advantageous effects of the embodiment.

### DESCRIPTION OF EMBODIMENT

A threaded connection for pipe according to an embodiment includes a pin having a tubular shape and a box having a tubular shape. The pin is provided continuously with a pipe body. The pin is inserted into the box. The box is made-up with the pin. The pin includes a pin sealing surface and a tapered male thread part. The pin sealing surface is provided to an outer peripheral surface of the pin at a front end portion of the pin. The tapered male thread part is provided to the outer peripheral surface of the pin. The tapered male thread part includes a first male thread part and a second male thread part. The first male thread part is disposed at a position closer to the pipe body than the pin sealing surface. The second male thread part is disposed at a position closer to the pipe body than the first male thread part, and is continuously formed with the first male thread part. The box includes a box sealing surface and a tapered female thread part. The box sealing surface is provided to an inner peripheral surface of the box corresponding to the pin sealing surface. The tapered female thread part is provided to the inner peripheral surface of the box. The tapered female thread part includes a first female thread part and a second female thread part. The first female thread part corresponds to the first male thread part. The second female thread part corresponds to the second male thread part. The first male thread part and the first female thread part have a first taper ratio. The second male thread part and the second female thread part have a second taper ratio. The second taper ratio is smaller than the first taper ratio (first configuration).

In the threaded connection for pipe according to the first configuration, the tapered male thread part of the pin includes the first male thread part and the second male thread part. The tapered female thread part of the box includes the first female thread part and the second female thread part corresponding to the tapered male thread part of the pin. The taper ratio (second taper ratio) of the second male thread part and the second female thread part, which are disposed on the pipe body side, is smaller than the taper ratio (first taper ratio) of the first male thread part and the first female thread part, which are disposed on the front end portion side of the pin, that is, on the sealing portion side. With such a configuration, it is possible to increase the wall thickness and rigidity of the pin while the critical cross section area of the box is maintained with restrictions on dimensions being imposed on the outer diameter and the inner diameter of the threaded connection. Accordingly, it is possible to achieve preferable external pressure resistance performance while the tensile strength of the threaded connection is ensured.

In the threaded connection for pipe according to the first configuration, in an axial direction of the pin, a length of the second male thread part may be greater than a length of the first male thread part (second configuration).

In the second configuration, the axial direction length of the second male thread part having a small taper ratio is greater than the axial direction length of the first male thread part having a large taper ratio. With such a configuration, it is possible to ensure a large region having a large wall thickness in the pin. Accordingly, it is possible to further increase rigidity of the pin and hence, it is possible to easily increase external pressure resistance performance. Further, there are restrictions on the outer diameter and the inner diameter of the threaded connection and hence, the entire length of the tapered male thread part is greater when the second male thread part having a small taper ratio has a large axial direction length than when the first male thread part having a large taper ratio has a large axial direction length, so that an engagement length between the tapered male thread part and the tapered female thread part is increased. Therefore, tensile resistance performance of the threaded connection is increased and hence, jumping out (slipping out) of the threaded connection is less likely to occur.

In the threaded connection for pipe according to the first or second configuration, the tapered male thread part may include a perfect thread part and an imperfect thread part. The imperfect thread part is disposed at a position closer to the pipe body than the perfect thread part. In this case, the boundary between the first male thread part and the second male thread part may be disposed within the perfect thread part (third configuration).

In the threaded connection for pipe according to any one of the first to third configurations, the pin may further include a pin shoulder surface. The pin shoulder surface is provided to a front end surface of the pin, for example. In this case, the box further includes a box shoulder surface, and the box shoulder surface is provided on a depth side of the box corresponding to the pin shoulder surface (fourth configuration).

Hereinafter, an embodiment of the present disclosure will be described with reference to the drawings. In the drawings, identical or corresponding components are given the same reference symbols, and the repeated description will be omitted.

### [Configuration of threaded connection]

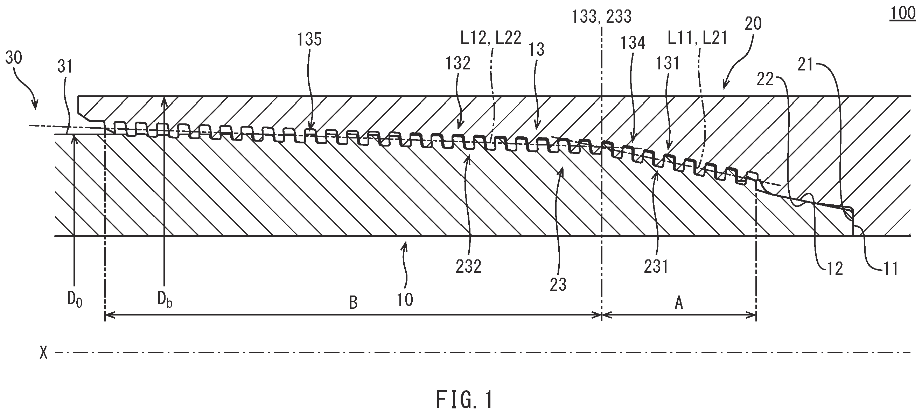

FIG. 1 is a longitudinal cross-sectional view of a threaded connection 100 for pipe according to the present embodiment. A longitudinal cross section of the threaded connection 100 refers to a cross section of the threaded connection 100 taken along a plane including a pipe axis X. Hereinafter, a direction in which the pipe axis X extends is referred to as "axial direction", and the radial direction of the threaded connection 100 is simply referred to as "radial direction".

The threaded connection 100 is used to connect pipes to each other. Typically, the threaded connection 100 connects steel pipes to each other. The threaded connection 100 includes a pin 10 having a tubular shape and a box 20 having a tubular shape. The pin 10 is provided continuously with a body 31 of a pipe 30, being a connection target. The pin 10 is provided at the end portion of the pipe 30. The pin 10 is inserted into the box 20, and is made-up with the box 20. The box 20 may be provided at the end portion of a pipe, being a connection target, or may be provided at the end portion of a coupling formed separately from the pipe as the connection target. That is, the threaded connection 100 may be an integral-type threaded connection or a coupling-type threaded connection.

The pin 10 includes a pin shoulder surface 11, a pin sealing surface 12, and a tapered male thread part 13. The pin shoulder surface 11, the pin sealing surface 12, and the tapered male thread part 13 are arranged in this order from the front end side of the pin 10 toward the pipe body 31.

The pin shoulder surface 11 is provided to the front end surface of the pin 10. The pin shoulder surface 11 is an annular face that uses the pipe axis X as the axial center. In the longitudinal cross section of the threaded connection 100, the pin shoulder surface 11 may be perpendicular to the pipe axis X, or may be inclined relative to the pipe axis X. The pin shoulder surface 11 having an annular shape may be inclined with respect to the pipe axis X such that, for example, the outer circumferential edge of the pin shoulder surface 11 is located closer to the front end of the pin 10 than the inner circumferential edge of the pin shoulder surface 11.

The pin sealing surface 12 is provided to the outer peripheral surface of the pin 10 at the front end portion of the pin 10. The pin sealing surface 12 is disposed between the pin shoulder surface 11 and the tapered male thread part 13. The pin sealing surface 12 is a side surface of a rotary symmetrical body that uses the pipe axis X as the axis of rotation. When the threaded connection 100 is viewed in a longitudinal cross-sectional view, for example, the pin sealing surface 12 may be a curved line that protrudes toward the box 20, or may be a straight line that is inclined with respect to the pipe axis X in such a way as to approach the pipe axis X as the pin sealing surface 12 extends toward the front end side of the pin 10. The pin sealing surface 12 may be formed by combining two or more kinds of such a curved line and/or straight line.

The tapered male thread part 13 is provided to the outer peripheral surface of the pin 10. The tapered male thread part 13 is provided from the vicinity of the pin sealing surface 12 to the vicinity of the pipe body 31. The entire tapered male thread part 13 is formed of a tapered thread. Examples of kinds of thread forming the tapered male thread part 13 include an API-standard buttress thread, a trapezoidal-shaped thread formed by using a buttress thread as a base, and a dovetail-shaped thread.

The tapered male thread part 13 includes a first male thread part 131 and a second male thread part 132. The first male thread part 131 is disposed at a position closer to the pipe body 31 than the pin sealing surface 12. The first male thread part 131 is provided to the tapered male thread part 13 in a region proximate to the pin sealing surface 12. The second male thread part 132 is disposed at a position closer to the pipe body 31 than the first male thread part 131. The second male thread part 132 is continuously formed with the first male thread part 131. That is, other constitutional elements, such as a sealing surface and a shoulder surface, for example, are not interposed between the first male thread part 131 and the second male thread part 132. The second male thread part 132 is directly coupled to the first male thread part 131.

The box 20 has an outer diameter D_{b}. The outer diameter D_{b} of the box 20 is less than 110% of an outer diameter D₀ of the pipe body 31, for example. That is, the threaded connection 100 may be a so-called slim-type (semi-flush-type) threaded connection. The box 20 includes a box shoulder surface 21, a box sealing surface 22, and a tapered female thread part 23. The box shoulder surface 21, the box sealing surface 22, and the tapered female thread part 23 are provided to the box 20, respectively corresponding to the pin shoulder surface 11, the pin sealing surface 12, and the tapered male thread part 13.

The box shoulder surface 21 is provided on the depth side of the box 20 corresponding to the pin shoulder surface 11. In the same manner as the pin shoulder surface 11, the box shoulder surface 21 is an annular face that uses the pipe axis X as the axial center. In a made-up state of the pin 10 and the box 20, the box shoulder surface 21 is in contact with the pin shoulder surface 11, thus forming a shoulder part together with the pin shoulder surface 11. The pin shoulder surface 11 and the box shoulder surface 21 play a role of causing completion of making-up to be detected by suddenly increasing torque resistance by coming into contact with each other at the time of making-up and rotating, and play a role of strengthening engagement between the thread parts 13, 23 by generating fastening axial force in the threaded connection 100.

The box sealing surface 22 is provided to the inner peripheral surface of the box 20 corresponding to the pin sealing surface 12. The box sealing surface 22 is disposed between the box shoulder surface 21 and the tapered female thread part 23. The box sealing surface 22 is a side surface of a rotary symmetrical body that uses the pipe axis X as the axis of rotation. When the threaded connection 100 is viewed in a longitudinal cross-sectional view, for example, the box sealing surface 22 may be a curved line that protrudes toward the pin 10, or may be a straight line that is inclined with respect to the pipe axis X in such a way as to approach the pipe axis X as the box sealing surface 22 extends toward the depth side of the box 20. The box sealing surface 22 may be formed by combining two or more kinds of such a curved line and/or a straight line.

In a made-up state, the pin sealing surface 12 and the box sealing surface 22 form a sealing portion by metal-to-metal contact. When the description is made specifically, the box sealing surface 22 has a diameter smaller than the diameter of the pin sealing surface 12 in a state in which the pin 10 and the box 20 are not made-up with each other. A difference between the diameter of the pin sealing surface 12 and the diameter of the box sealing surface 22 is referred to as an interference in the radial direction. Due to such an interference, in a made-up state, the box sealing surface 22 interferes with the pin sealing surface 12, so that the diameter of the pin sealing surface 12 is reduced and the diameter of the box sealing surface 22 is increased. Due to an elastic resilient force of the pin sealing surface 12 having a reduced diameter and an elastic resilient force of the box sealing surface 22 having an increased diameter, the box sealing surface 22 comes into interference contact with the pin sealing surface 12 over the entire circumference, so that a high contact pressure is generated between the pin sealing surface 12 and the box sealing surface 22.

The tapered female thread part 23 is provided to the inner peripheral surface of the box 20. The tapered female thread part 23 is provided from the vicinity of the box sealing surface 22 to the vicinity of the pipe end portion of the box 20. The entire tapered female thread part 23 is formed of a tapered thread. The tapered female thread part 23 is formed of a thread having a shape that conforms with the tapered male thread part 13.

The tapered female thread part 23 includes a first female thread part 231 and a second female thread part 232. The first female thread part 231 is disposed at a position closer to the pipe end portion of the box 20 than the box sealing surface 22. The first female thread part 231 is provided to the tapered female thread part 23 in a region proximate to the box sealing surface 22. The second female thread part 232 is disposed at a position closer to the pipe end portion of the box 20 than the first female thread part 231. The second female thread part 232 is continuously formed with the first female thread part 231. That is, other constitutional elements, such as a sealing surface and a shoulder surface, for example, are not interposed between the first female thread part 231 and the second female thread part 232. The second female thread part 232 is directly coupled to the first female thread part 231. The first female thread part 231 corresponds to the first male thread part 131, and the second female thread part 232 corresponds to the second male thread part 132.

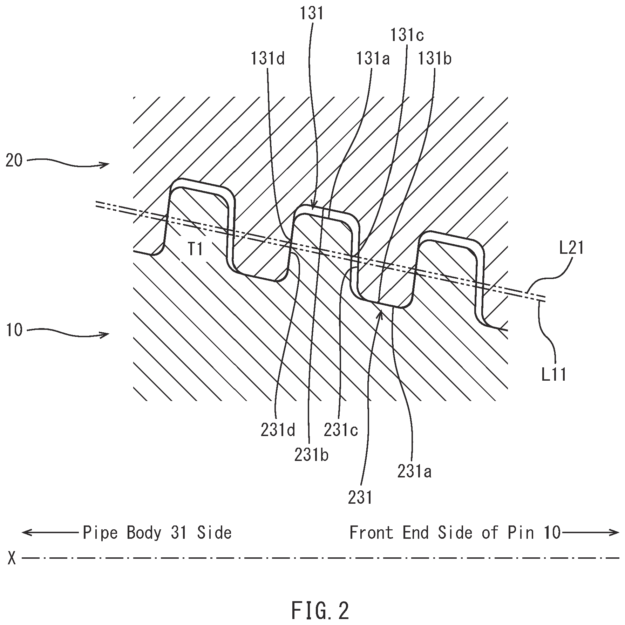

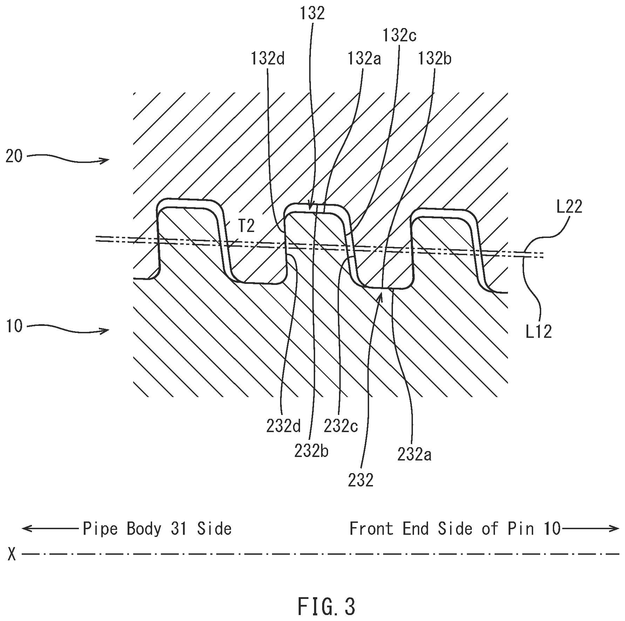

FIG. 2 is an enlarged view of the first male thread part 131 and the first female thread part 231. FIG. 3 is an enlarged view of the second male thread part 132 and the second female thread part 232.

Referring to FIG. 2, the first male thread part 131 includes a thread crest 131a, a thread root 131b, a stabbing flank 131c, and a load flank 131d. The thread crest 131a is coupled to the thread root 131b through the stabbing flank 131c and the load flank 131d. The stabbing flank 131c is disposed at a position closer to the front end side of the pin 10 than the thread crest 131a. The load flank 131d is disposed at a position closer to the pipe body 31 than the thread crest 131a.

The first female thread part 231 includes a thread crest 231a, a thread root 231b, a stabbing flank 231c, and a load flank 231d. In a state in which making-up of the pin 10 and the box 20 is completed, the load flank 231d of the first female thread part 231 is in contact with the load flank 131d of the first male thread part 131, and the stabbing flank 231c of the first female thread part 231 faces the stabbing flank 131c of the first male thread part 131 with a gap therebetween. In a state in which making-up is completed, the thread crest 231a of the first female thread part 231 is in contact with the thread root 131b of the first male thread part 131, and the thread root 231b of the first female thread part 231 faces the thread crest 131a of the first male thread part 131 with a gap therebetween. Alternatively, the thread root 231b of the first female thread part 231 may be in contact with the thread crest 131a of the first male thread part 131, and the thread crest 231a of the first female thread part 231 may face the thread root 131b of the first male thread part 131 with a gap therebetween, or may be in contact with the thread root 131b of the first male thread part 131.

The first female thread part 231 has an interference in the radial direction between the first female thread part 231 and the first male thread part 131. That is, in a state in which the pin 10 and the box 20 are not made-up, for example, the diameter of the thread crest 231a of the first female thread part 231 is smaller than the diameter of the thread root 131b of the first male thread part 131. More specifically, when, in a non-made-up state, the diameter of the thread crest 231a of the first female thread part 231 is compared with the diameter of the thread root 131b of the first male thread part 131 at a position at the same distance in the axial direction from the pin shoulder surface 11 and the box shoulder surface 21 (FIG. 1), the diameter of the thread crest 231a is smaller than the diameter of the thread root 131b. Further, in a state in which the pin 10 and the box 20 are not made-up with each other, the diameter of the thread root 231b of the first female thread part 231 may be smaller than the diameter of the thread crest 131a of the first male thread part 131. That is, when, in a non-made-up state, the diameter of the thread root 231b of the first female thread part 231 is compared with the diameter of the thread crest 131a of the first male thread part 131 at a position at the same distance in the axial direction from the pin shoulder surface 11 and the box shoulder surface 21 (FIG. 1), the diameter of the thread root 231b may be smaller than the diameter of the thread crest 131a. In a made-up state of the pin 10 and the box 20, at least one of the thread crest 231a and the thread root 231b of the first female thread part 231 is in interference contact with the first male thread part 131.

The taper ratio of the first male thread part 131 is the taper ratio of a taper line L11, which is obtained by connecting the centers of the load flanks 131d of a plurality of perfect threads which are present when the threaded connection 100 is viewed in a longitudinal cross-sectional view. The taper ratio of the first female thread part 231 is the taper ratio of a taper line L21, which is obtained by connecting the centers of the load flanks 231d of a plurality of perfect threads which are present when the threaded connection 100 is viewed in a longitudinal cross-sectional view. The taper ratio of the first female thread part 231 is equal to the taper ratio of the first male thread part 131. However, it is sufficient that the taper ratio of the first female thread part 231 be equal to the taper ratio of the first male thread part 131 in terms of design, and a difference within production tolerances between the taper ratio of the first female thread part 231 and the taper ratio of the first male thread part 131 is allowed. Examples of the production tolerances include production tolerances specified by API Spec. 5B: 2008. In API Spec. 5B: 2008, production tolerances of a thread taper of a buttress thread are specified such that production tolerances of a female thread part (coupling thread) of a box are +0.45% to -0.25%, production tolerances of a perfect male thread part of a pin are +0.35% to -0.15%, and production tolerances of imperfect male thread part of a pin are +0.45% to -0.15%. The taper ratio of the first male thread part 131 and the taper ratio of the first female thread part 231 are at a first taper ratio T1. The first taper ratio T1 is 10.00% or more (1/10 taper or more), for example. The first taper ratio T1 may be 30.00% or less (3/10 taper or less). FIG. 2 shows the taper lines L11, L21 only at a portion on one side of the pipe axis X.

Referring to FIG. 3, the second male thread part 132 includes a thread crest 132a, a thread root 132b, a stabbing flank 132c, and a load flank 132d. The thread crest 132a is coupled to the thread root 132b through the stabbing flank 132c and the load flank 132d. The stabbing flank 132c is disposed at a position closer to the front end side of the pin 10 than the thread crest 132a. The load flank 132d is disposed at a position closer to the pipe body 31 than the thread crest 132a.

The second female thread part 232 includes a thread crest 232a, a thread root 232b, a stabbing flank 232c, and a load flank 232d. In a state in which making-up of the pin 10 and the box 20 is completed, the load flank 232d of the second female thread part 232 is in contact with the load flank 132d of the second male thread part 132, and the stabbing flank 232c of the second female thread part 232 faces the stabbing flank 132c of the second male thread part 132 with a gap therebetween. In a state in which making-up is completed, the thread crest 232a of the second female thread part 232 is in contact with the thread root 132b of the second male thread part 132, and the thread root 232b of the second female thread part 232 faces the thread crest 132a of the second male thread part 132 with a gap therebetween. Alternatively, the thread root 232b of the second female thread part 232 may be in contact with the thread crest 132a of the second male thread part 132, and the thread crest 232a of the second female thread part 232 may face the thread root 132b of the second male thread part 132 with a gap therebetween, or may be in contact with the thread root 132b of the second male thread part 132.

The second female thread part 232 has an interference in the radial direction between the second female thread part 232 and the second male thread part 132. That is, in a state in which the pin 10 and the box 20 are not made-up with each other, for example, the diameter of the thread crest 232a of the second female thread part 232 is smaller than the diameter of the thread root 132b of the second male thread part 132. More specifically, when, in a non-made-up state, the diameter of the thread crest 232a of the second female thread part 232 is compared with the diameter of the thread root 132b of the second male thread part 132 at a position at the same distance in the axial direction from the pin shoulder surface 11 and the box shoulder surface 21 (FIG. 1), the diameter of the thread crest 232a is smaller than the diameter of the thread root 132b. Further, in a state in which the pin 10 and the box 20 are not made-up with each other, the diameter of the thread root 232b of the second female thread part 232 may be smaller than the diameter of the thread crest 132a of the second male thread part 132. That is, when, in a non-made-up state, the diameter of the thread root 232b of the second female thread part 232 is compared with the diameter of the thread crest 132a of the second male thread part 132 at a position at the same distance in the axial direction from the pin shoulder surface 11 and the box shoulder surface 21 (FIG. 1), the diameter of the thread root 232b may be smaller than the diameter of the thread crest 132a. In a made-up state of the pin 10 and the box 20, at least one of the thread crest 232a and the thread root 232b of the second female thread part 232 is in interference contact with the second male thread part 132.

The taper ratio of the second male thread part 132 is the taper ratio of a taper line L12, which is obtained by connecting the centers of the load flanks 132d of a plurality of perfect threads which are present when the threaded connection 100 is viewed in a longitudinal cross-sectional view. The taper ratio of the second female thread part 232 is the taper ratio of a taper line L22, which is obtained by connecting the centers of the load flanks 232d of a plurality of perfect threads which are present when the threaded connection 100 is viewed in a longitudinal cross-sectional view. The taper ratio of the second female thread part 232 is equal to the taper ratio of the second male thread part 132. However, in the same manner as the first thread parts 131, 231, it is sufficient that the taper ratio of the second female thread part 232 be equal to the taper ratio of the second male thread part 132 in terms of design, and a difference within production tolerances between the taper ratio of the second female thread part 232 and the taper ratio of the second male thread part 132 is allowed. The taper ratio of the second male thread part 132 and the taper ratio of the second female thread part 232 are at a second taper ratio T2. The second taper ratio T2 is 1.50% or more (3/200 taper or more), for example. The second taper ratio T2 may be 10.00% or less (1/10 taper or less). FIG. 3 shows the taper lines L12, L22 only at a portion on one side of the pipe axis X.

As shown in FIG. 2, the first male thread part 131 and the first female thread part 231 have the first taper ratio T1. As shown in FIG. 3, the second male thread part 132 and the second female thread part 232 have the second taper ratio T2. The second taper ratio T2 is smaller than the first taper ratio T1. The ratio T1/T2 of the first taper ratio T1 to the second taper ratio T2 is 1.25 or more, for example. T1/T2 may be 15.00 or less.

Returning to FIG. 1, in the axial direction of the pin 10, it is preferable that a length B of the second male thread part 132 extending at the second taper ratio T2 be greater than a length A of the first male thread part 131 extending at the first taper ratio T1. However, the length B of the second male thread part 132 may be equal to or less than the length A of the first male thread part 131. The ratio of the length B of the second male thread part 132 to the length A of the first male thread part 131 is 0.25 or more, for example (B/A ≥ 0.25). In the case in which the length B of the second male thread part 132 is greater than the length A of the first male thread part 131, the ratio of the length B to the length A may be 1.50 or more (B/A ≥ 1.50). The ratio of the length B of the second male thread part 132 to the length A of the first male thread part 131 may be 3.0 or less (B/A ≤ 3.0). The first male thread part 131 includes, for example, at least three threads when the threaded connection 100 is viewed in a longitudinal cross-sectional view. The upper limit of the number of threads included in the first male thread part 131 when the threaded connection 100 is viewed in a longitudinal cross-sectional view is accordingly determined by the wall thickness of the pin 10.

In the axial direction of the threaded connection 100, a boundary 233 between the first female thread part 231 and the second female thread part 232 of the tapered female thread part 23 is located at a position substantially equal to the position of a boundary 133 between the first male thread part 131 and the second male thread part 132 of the tapered male thread part 13. Specifically, the boundary 233 between the first female thread part 231 and the second female thread part 232 is located within a range, which is calculated from production tolerances of other elements of the threaded connection 100, using the boundary 133 between the first male thread part 131 and the second male thread part 132 as the reference. For example, the boundary 233 between the first female thread part 231 and the second female thread part 232 is preferably located within a range of ±0.50 times the thread pitch of the first male thread part 131, and is more preferably located within a range of ±0.20 times the thread pitch of the first male thread part 131, in the axial direction of the threaded connection 100 from the boundary 133 between the first male thread part 131 and the second male thread part 132. The boundary 133 between the first male thread part 131 and the second male thread part 132 is a point of intersection between the taper line L11 and the taper line L12. The boundary 233 between the first female thread part 231 and the second female thread part 232 is a point of intersection between the taper line L21 and the taper line L22. In FIG. 1, for the sake of simplification of the drawing, the taper line L11 of the first male thread part 131 and the taper line L21 of the first female thread part 231 are shown by a common two-dot chain line, and the taper line L12 of the second male thread part 132 and the taper line L22 of the second female thread part 232 are shown by a common two-dot chain line.

Continuously referring to FIG. 1, the tapered male thread part 13 includes a perfect thread part 134 and an imperfect thread part 135. The perfect thread part 134 extends from the vicinity of the pin sealing surface 12 toward the pipe body 31. The imperfect thread part 135 is disposed at a position closer to the pipe body 31 than the perfect thread part 134. The imperfect thread part 135 is a part of the tapered male thread part 13 in which the thread crest is gradually cut off as the imperfect thread part 135 approaches the pipe body 31. Therefore, the thread height of the imperfect thread part 135 is smaller than the thread height of the perfect thread part 134. The boundary 133 between the first male thread part 131 and the second male thread part 132 is disposed within the perfect thread part 134 of the tapered male thread part 13, for example. In this case, the perfect thread part 134 of the tapered male thread part 13 is present over the first male thread part 131 and the second male thread part 132, while the imperfect thread part 135 is present in the second male thread part 132.

### [Advantageous effect]

In the threaded connection 100 for pipe according to this embodiment, the tapered male thread part 13 of the pin 10 includes the first male thread part 131 and the second male thread part 132, and the tapered female thread part 23 of the box 20 includes the first female thread part 231 and the second female thread part 232 correspondingly. The second taper ratio T2 of the second male thread part 132 and the second female thread part 232, which are disposed on the pipe body 31 side, is smaller than the first taper ratio T1 of the first male thread part 131 and the first female thread part 231, which are disposed on the front end portion side of the pin 10, that is, on the sealing surfaces 12, 22 side. With such a configuration, it is possible to increase the wall thickness and rigidity of the pin 10 while the critical cross section area of the box 20 is maintained with restrictions to dimensions being imposed on the outer diameter and the inner diameter of the threaded connection 100. Hereinafter, the description will be made more specifically.

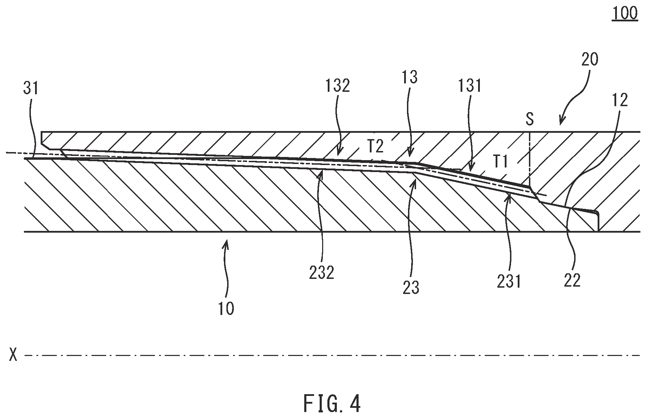

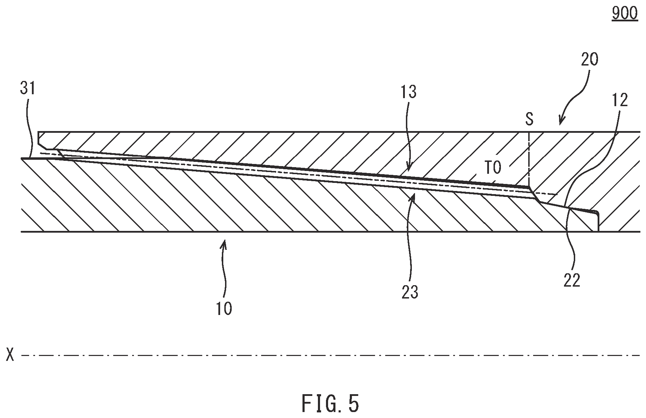

FIG. 4 is a longitudinal cross-sectional view showing the schematic configuration of the threaded connection 100 according to this embodiment, and FIG. 5 is a longitudinal cross-sectional view showing the schematic configuration of a threaded connection 900 having the same design of respective constitutional elements as those of the threaded connection 100 shown in FIG. 4 except for the taper ratio of the thread parts 13, 23. In the threaded connection 100 shown in FIG. 4, the taper ratio of the thread parts 13, 23 changes from the first taper ratio T1 to the second taper ratio T2 from the sealing surfaces 12, 22 side toward the pipe body 31 side (T1 > T2). In contrast, in the threaded connection 900 shown in FIG. 5, the thread parts 13, 23 have a homogeneous taper ratio T0 throughout the thread parts 13, 23. As shown in FIG. 4 and FIG. 5, a critical cross section area S of the box 20 of the threaded connection 100 (the transverse cross-sectional area of the box 20 at the end of engagement between the thread parts 13, 23) is equal to a critical cross section area S of the box 20 of the threaded connection 900. However, the threaded connection 100 has a larger wall thickness at the portion of the pin 10 at which the tapered male thread part 13 is provided than the threaded connection 900. By causing the thread parts 13, 23 to be thread parts having two taper regions as described above, it is possible to increase rigidity of the pin 10 by increasing the wall thickness of the pin 10 while the critical cross section area of the box 20 is ensured. Therefore, it is possible to reduce diameter reducing deformation of the pin 10 as a whole caused by intrusion of an external pressure into the thread parts 13, 23. Further, in the threaded connection 100 according to this embodiment, the wall thickness of the box at a portion around the box sealing surface 22 ranging from the critical cross section of the box 20 to the box shoulder surface 21 is substantially equal to that of the threaded connection 900 shown in FIG. 5 and hence, it is possible to suppress plastic deformation of the front end portion of the pin 10 caused by a load of an external pressure and diameter reducing deformation of the box 20 to a level substantially equal to a level of the threaded connection 900 shown in FIG. 5. Accordingly, according to the threaded connection 100 according to this embodiment, it is possible to achieve preferable external pressure resistance performance.

For example, in the case in which the tapered male thread part 13 is formed of the first male thread part 131 extending at the first taper ratio T1 and the second male thread part 132 extending at the second taper ratio T2, and the tapered female thread part 23 is a female thread part having a homogeneous taper ratio, there may be a case in which an intended interference in the radial direction cannot be obtained for the tapered male thread part 13 and the tapered female thread part 23, so that performance cannot be achieved due to an insufficient interference, or excessive interference occurs between the tapered male thread part 13 and the tapered female thread part 23, thus becoming the cause of galling. However, the threaded connection 100 according to this embodiment is configured such that each of the tapered male thread part 13 and the tapered female thread part 23 is a thread part having two taper regions, and the position of a point at which the taper of the tapered male thread part 13 is switched is substantially matches the position of a point at which the taper of the tapered female thread part 23 is switched in the axial direction. With such a configuration, an engagement length between the tapered male thread part 13 and the tapered female thread part 23 is ensured. Therefore, when a tensile load is applied to the threaded connection 100, jumping out (slipping out) of the threaded connection 100 is less likely to occur. Further, excessive interference is less likely to occur between the tapered male thread part 13 and the tapered female thread part 23 and hence, it is possible to prevent galling at the time of making-up the pin 10 and the box 20.

In the present embodiment, it is preferable that the axial direction length B of the second male thread part 132 be greater than the axial direction length A of the first male thread part 131. With such a configuration, it is possible to ensure a large region having a large wall thickness in the pin 10. Accordingly, it is possible to further increase rigidity of the pin 10 and hence, it is possible to easily increase external pressure resistance performance. Further, there are restrictions on the outer diameter and the inner diameter of the pin 10 and hence, the entire length of the tapered male thread part 13 is greater when the second male thread part 132 having a relatively small second taper ratio has a large axial direction length B than when the first male thread part 131 having a relatively large first taper ratio T1 has a large axial direction length A, so that an engagement length between the tapered male thread part 13 and the tapered female thread part 23 is increased. Therefore, tensile resistance performance of the threaded connection 100 is increased and hence, it is possible to suppress jumping out of the threaded connection 100.

For example, in the case in which a constitutional element, such as a sealing surface, a shoulder surface, or a thread-free portion, is provided between the first male thread part 131 and the second male thread part 132, such a constitutional element requires a wall thickness, and it is necessary to set the maximum diameter of the thread crest 131a of the first male thread part 131 to be smaller than the diameter of the constitutional element and hence, the front end portion of the pin 10 has a small wall thickness. Therefore, external pressure resistance performance of the threaded connection 100 is reduced. Further, in the case in which a constitutional element other than a thread part is disposed between the first male thread part 131 and the second male thread part 132, a structure is adopted in which the threaded connection 100 has an intermediate critical cross section. The area of the intermediate critical cross section is usually smaller than the area of the critical cross section of the pin 10 or the box 20 in which a constitutional element other than a thread part is not present between the first male thread part 131 and the second male thread part 132. Therefore, tensile resistance performance of the threaded connection 100 may be lowered.

In contrast, in the present embodiment, the second male thread part 132 is provided continuously with the first male thread part 131. That is, the first male thread part 131 and the second male thread part 132 are disposed adjacent to each other, and other constitutional elements are not interposed between the first male thread part 131 and the second male thread part 132. Accordingly, it is possible to avoid a situation in which the wall thickness of the front end portion of the pin 10 is reduced due to a constitutional element other than the first male thread part 131 and the second male thread part 132. As a result, it becomes easy to ensure rigidity of the pin 10 and hence, it is possible to ensure preferable external pressure resistance performance. Further, the threaded connection 100 does not include an intermediate critical cross section and hence, it is possible to ensure tensile resistance performance of the threaded connection 100.

In the threaded connection 100 according to the present embodiment, in a made-up state of the pin 10 and the box 20, at least one of the thread crest 231a and the thread root 231b of the first female thread part 231 is in interference contact with the first male thread part 131. Further, in the made-up state, at least one of the thread crest 232a and the thread root 232b of the second female thread part 232 is in interference contact with the second male thread part 132. By causing the first male thread part 131 and the second male thread part 132 to interfere with the first female thread part 231 and the second female thread part 232 as described above, it is possible to maximize tensile resistance performance with a limited wall thickness of the threaded connection 100. To be more specific, since the tapered thread part 13 is formed by the first thread part 131 and the second thread part 132 having different taper ratios and the tapered thread part 23 is formed by the first thread part 231 and the second thread part 232 having different taper ratios, the substantial critical cross section area S of the box 20 at the end of engagement between the tapered thread parts 13, 23 can be maximized. Further, by ensuring and strengthening the engagement by providing an interference in the radial direction for the tapered thread parts 13, 23, it is possible to maximize tensile resistance performance of the threaded connection 100 with restrictions imposed on wall thickness.

Although the embodiment according to the present disclosure has been described heretofore, the present disclosure is not limited to the above-mentioned embodiment, and various modifications are conceivable without departing from the gist of the present disclosure.

In the threaded connection 100 according to the above-mentioned embodiment, the pin 10 includes the pin sealing surface 12 provided at the front end portion thereof. The pin 10 may include another pin sealing surface as an outer pin sealing surface in addition to the pin sealing surface 12 serving as an inner pin sealing surface. The outer pin sealing surface is provided at a position closer to the pipe body 31 than the tapered male thread part 13. In this case, the box 20 includes an outer box sealing surface that corresponds to the outer pin sealing surface in addition to the box sealing surface 22 serving as an inner box sealing surface. The outer pin sealing surface and the outer box sealing surface can exhibit sealing performance mainly with respect to an external pressure. However, the threaded connection 100 according to the above-mentioned embodiment can achieve preferable external pressure resistance performance only by the inner sealing surfaces 12, 22. Therefore, the threaded connection 100 does not particularly require either the outer pin sealing surface or the outer box sealing surface.

In the threaded connection 100 according to the above-mentioned embodiment, the pin 10 includes the pin shoulder surface 11 provided to the front end surface thereof. The box 20 includes the box shoulder surface 21 corresponding to the pin shoulder surface 11. However, the pin 10 and the box 20 need not include shoulder surfaces.

Alternatively, the pin 10 may include another pin shoulder surface in addition to or in place of the pin shoulder surface 11. The other pin shoulder surface is provided at a position closer to the pipe body 31 than the tapered male thread part 13. In this case, the box 20 includes a box shoulder surface that corresponds to the pin shoulder surface. These shoulder surfaces can exhibit certain sealing performance with respect to an external pressure. However, the threaded connection 100 according to the above-mentioned embodiment can achieve preferable external pressure resistance performance only by the inner sealing surfaces 12, 22. Therefore, of the plurality of constitutional elements provided to the pin 10 and the box 20 of the threaded connection 100, constitutional elements disposed at a position closest to the pipe body 31 may be the tapered male thread part 13 and the tapered female thread part 23.

In the threaded connection 100 according to the above-mentioned embodiment, in a made-up state of the pin 10 and the box 20, the load flank 131d of the first male thread part 131 is in contact with the load flank 231d of the first female thread part 231, and the stabbing flank 131c of the first male thread part 131 faces the stabbing flank 231c of the first female thread part 231 with a gap therebetween. Further, in the made-up state, the load flank 132d of the second male thread part 132 is in contact with the load flank 232d of the second female thread part 232, and the stabbing flank 132c of the second male thread part 132 faces the stabbing flank 232c of the second female thread part 232 with a gap therebetween. However, in the made-up state, the load flank 131d of the first male thread part 131 and the load flank 132d of the second male thread part 132 may be respectively in contact with the load flank 231d of the first female thread part 231 and the load flank 232d of the second female thread part 232, and the stabbing flank 131c of the first male thread part 131 and the stabbing flank 132c of the second male thread part 132 may be respectively in contact with the stabbing flank 231c of the first female thread part 231 and the stabbing flank 232c of the second female thread part 232. That is, each of the tapered male thread part 13 and the tapered female thread part 23 may be formed of a wedge thread.

In the above-mentioned embodiment, the tapered male thread part 13 is formed of the first male thread part 131 and the second male thread part 132. However, the tapered male thread part 13 may further include another male thread part. That is, although the tapered male thread part 13 may be a male thread part having two thread taper regions as in the case of the above-mentioned embodiment, the tapered male thread part 13 may be a male thread part having three or more thread taper regions. The tapered female thread part 23 is configured to include a thread taper that corresponds to the tapered male thread part 13.

### EXAMPLE

Hereinafter, the present disclosure will be described in more detail with reference to an example. However, the present disclosure is not limited to the following example.

To confirm advantageous effects of the present disclosure, an analysis was conducted on a plurality of specimens of threaded connections using an elastic plasticity finite element method (FEM). In this analysis, a pin and a box of each specimen were made-up with each other and, thereafter, a combined load simulating a test specified by API RP 5C5: 2017 was repeatedly loaded, and an external pressure resistance performance was then evaluated.

Main common conditions in this analysis are shown below.
- Size of pipe: 9-5/8" 53.5# (outer diameter of pipe body: 244.5 mm, wall thickness: 13.8 mm)
- Material: API standards Q125 steel (yield stress: 862 MPa, elastic modulus: 205 GPa)
- Thread pitch: 5.08 to 5.11 mm
- Height of load flank of male thread part: 1.40 to 1.45 mm
- Outer diameter of box: 252.5 mm
- Making-up condition: after shoulder surfaces are in pressure contact each other, additional 1/100 turns to be made

External pressure resistance performance was evaluated based on a sealing contact force under a simple external pressure load after internal pressure with tension, internal pressure with compression, and external pressure with compression that correspond to 100% of yield stress of a pipe body were loaded. Higher sealing contact force indicates more excellent external pressure resistance performance. Table 1 shows analysis conditions and evaluation results for each specimen.

**[Table 1]**

| No. | Thread length (mm) | | Thread length ratio | Entire length of thread (mm) | Taper ratio (%) | | Ratio between taper ratios | External pressure resistance performance | Remarks |
|---|---|---|---|---|---|---|---|---|---|
| | First thread part | Second thread part | | | First thread part | Second thread part | | | |
| | A | B | B/A | A+B | T1 | T2 | T1/T2 | | |
| 1 | 40.6 | 116.2 | 2.86 | 156.8 | 25.00 | 4.17 | 6.00 | 5.22 | Example |
| 2 | 101.6 | 41.4 | 0.41 | 143.0 | 12.50 | 5.56 | 2.25 | 1.73 | Example |
| 3 | 81.3 | 58.1 | 0.71 | 139.4 | 12.50 | 8.33 | 1.50 | 1.98 | Example |
| 4 | 81.3 | 35.2 | 0.43 | 116.5 | 17.78 | 1.56 | 11.40 | 3.12 | Example |
| 5 | 61.0 | 93.0 | 1.52 | 154.0 | 22.22 | 1.56 | 14.24 | 4.31 | Example |
| 6 | - | - | - | 150.0 | 10.00 | 10.00 | 1.00 | 1.00 | Comparative Example (one taper region) |

In each of threaded connections of specimens 1 to 5, a thread part is formed of a first thread part having a taper ratio T1 and a second thread part having a taper ratio T2, which is smaller than the taper ratio T1 (Examples). In a threaded connection of a specimen 6, a thread part is formed to have a homogeneous taper ratio throughout the thread part (Comparative Example). In Table 1, external pressure resistance performance (sealing contact force) of the specimen 6 is taken as 1, and external pressure resistance performance (sealing contact force) of each specimen is shown as a relative value to the external pressure resistance performance of the specimen 6.

As shown in Table 1, each of the specimens 1 to 5 of Examples has a result that external pressure resistance performance is improved more than the specimen 6 of Comparative Example. That is, it was confirmed that when a thread part is formed of a first thread part on the front end side (sealing portion side) of a pin and a second thread part on the pipe body side, and the taper ratio T2 of the second thread part is set to be smaller than the taper ratio T1 of the first thread part, external pressure resistance performance is improved compared with a case in which a thread part is formed of one taper region.

Regarding the length A of the first thread part and the length B of the second thread part in the axial direction of the threaded connection, external pressure resistance performance was improved more in the specimens 2 to 4 in which the length A is greater than the length B than the specimen 6 of Comparative Example. However, external pressure resistance performance was further improved in the specimens 1 and 5, in which the length B of the second thread part is greater than the length A of the first thread part. Therefore, it is preferable that the length B of the second thread part be greater than the length A of the first thread part.

### REFERENCE SIGNS LIST

100: threaded connection for pipe
10: pin
11: pin shoulder surface
12: pin sealing surface
13: tapered male thread part
131: first male thread part
132: second male thread part
133: boundary
134: perfect thread part
135: imperfect thread part
20: box
21: box shoulder surface
22: box sealing surface
23: tapered female thread part
231: first female thread part
232: second female thread part
233: boundary
31: pipe body

## Claims

1. A threaded connection for pipe, the threaded connection comprising:
a pin provided continuously with a pipe body and having a tubular shape; and
a box having a tubular shape, the pin being inserted into the box, the box being made-up with the pin, wherein
the pin includes
a pin sealing surface provided to an outer peripheral surface of the pin at a front end portion of the pin, and
a tapered male thread part provided to the outer peripheral surface, the tapered male thread part including a first male thread part and a second male thread part, the first male thread part being disposed at a position closer to the pipe body than the pin sealing surface, the second male thread part being disposed at a position closer to the pipe body than the first male thread part and being continuously formed with the first male thread part,
the box includes
a box sealing surface provided to an inner peripheral surface of the box corresponding to the pin sealing surface, and
a tapered female thread part provided to the inner peripheral surface, the tapered female thread part including a first female thread part corresponding to the first male thread part and a second female thread part corresponding to the second male thread part,
the first male thread part and the first female thread part have a first taper ratio, and
the second male thread part and the second female thread part have a second taper ratio, which is smaller than the first taper ratio.

2. The threaded connection for pipe according to claim 1, wherein in an axial direction of the pin, a length of the second male thread part is greater than a length of the first male thread part.

3. The threaded connection for pipe according to claim 1, wherein
the tapered male thread part includes a perfect thread part and an imperfect thread part that is disposed at a position closer to the pipe body than the perfect thread part, and
a boundary between the first male thread part and the second male thread part is disposed within the perfect thread part.

4. The threaded connection for pipe according to any one of claims 1 to 3, wherein
the pin further includes a pin shoulder surface provided to a front end surface of the pin, and
the box further includes a box shoulder surface that is provided on a depth side of the box corresponding to the pin shoulder surface.
